# EUROPEAN PATENT SPECIFICATION

(11) **EP 3 491 814 B1**
(45) Date of publication and mention of the grant of the patent: **14.04.2021**
(21) Application number: 17804064.8
(22) Date of filing: 24.07.2017
(51) Int. Cl.: H04M 11/04, G08B 25/01

(54) **CONTROL DEVICE OF A MEDIA VIEWING DEVICE AND EMERGENCY PROCEDURE BY MEANS OF SUCH A CONTROL DEVICE**
STEUERUNGSVORRICHTUNG EINER MEDIENBETRACHTUNGSVORRICHTUNG UND NOTFALLVERFAHREN MITTELS SOLCH EINER STEUERUNGSVORRICHTUNG
DISPOSITIF DE COMMANDE D'UN DISPOSITIF DE VISUALISATION MULTIMÉDIA ET PROCÉDURE D'URGENCE AU MOYEN D'UN TEL DISPOSITIF DE COMMANDE

(30) Priority: 01.08.2016 IT 201600080684
(43) Date of publication of application: 05.06.2019
(73) Proprietor: C.T. Consulting SRL, 24044 Dalmine (BG) (IT)
(72) Inventor: MANENTI, Roberto, 24044 Dalmine (BG) (IT)
(74) Representative: Vanosi, Adelio Valeriano
(86) International application number: PCT/EP2017/025222
(87) International publication number: WO 2018/033252

(56) References cited:
- US-A1- 2010 251 325
- US-A1- 2011 059 720
- US-A1- 2015 312 742
- US-B1- 8 896 436

## Description

### Technical Field

The present invention relates to a control device of a media viewing device.

Furthermore, the present invention relates to an emergency procedure by means of such a device.

### Background Art

The state of the art is represented by the patent application US 2013/0303108 A1 concerning various communication services, where it is possible for a user to start or require communication with a third party, such as an emergency service, using a network device pre-associated to a physical address. In an exemplary embodiment, each user of a group of end-users has an equipment that can be a display, such as a television or a video monitor, which may include or be connected to a device that communicates with the network, this device being an input port, a television STP electronic device, set-top box, a digital video recorder and/or personal computer. Since the network can determine or otherwise know the position and/or user's account associated with each device communicating with the network, a request from a particular device for communication with a third party may allow the system to determine the telephone number or another user's destination who established a contact and to detect information on the account associated with the device sending the request. The system can then establish a communication between the destination determined by the user and a third party. The system can also send messages to one or more predetermined subjects according to user preferences. This can be useful when, for example, the user is an elderly person who requires emergency services. In this case, the user can be automatically contacted, for example, through a SMS message or by e-mail, etc.

The invention of the patent application US 2013/0303108 A1 provides a method to communicate through an apparatus of media viewing connected to the Internet network, so as to carry out an emergency procedure in order to reach a user, in trouble, in need of care, effectively activating a predefined list of rescue channels by ripple effect. Documents US 2015/312742 A1 and US 2010/251325 A1 disclose control devices of a media viewing device.

This state of the art provides an opportunity to provide equipment suitable to allow the activation of the emergency services and/or medical/pharmaceutical alerts or to perform interventional procedures such as those of the state.

A scope of the present invention is to solve the above mentioned problems of the prior art by providing a control device of a media viewing device, able to send and/or receive a default media content to start an emergency procedure, with respect to a Pre-ordered list of end user devices.

A further aim is to provide a control device that enables a connection and an immediate operation to start a default emergency procedure.

A further aim is to be able to start an emergency procedure by manual activation.

A further aim is to have further connecting means to allow the receiving and sending of SMS messages, the wi-fi connection and / or Bluetooth, the hand-free activation of microphones and loudspeakers, both internal and external with respect to the media viewing device, the activation of LED for night detection and flashing LEDs during the operational phase.

### Disclosure of Invention

The above and other aims and advantages of the invention, as will appear from the following description, are achieved with an emergency procedure, by means of a control device, such as that described in claim 1.

Preferred embodiments of the present invention are the subjects of the dependent claims.

It is understood that all of the appended claims form an integral part of the present description.

### Brief Description of Drawings

The present invention will be better described by some preferred embodiments, given as an example and not limitation, with reference to the accompanying drawings, in which:
FIG. 1 shows a diagram of an embodiment of the control device of a media viewing device for interaction with a network of media content and/or a communication network, according to the present invention;
FIGS. 2, 3, show an axonometric view of an embodiment of the control device, according to the present invention;
FIGS. 4, 5, show an axonometric view of a sub-device of one embodiment of the control device, according to the present invention;
FIG. 6 shows a diagram of the operation of a first embodiment of an emergency procedure, according to the present invention; and
FIG. 7 shows a diagram of the operation of a second embodiment of an emergency procedure, according to the present invention.

### Modes for Carrying Out the Invention

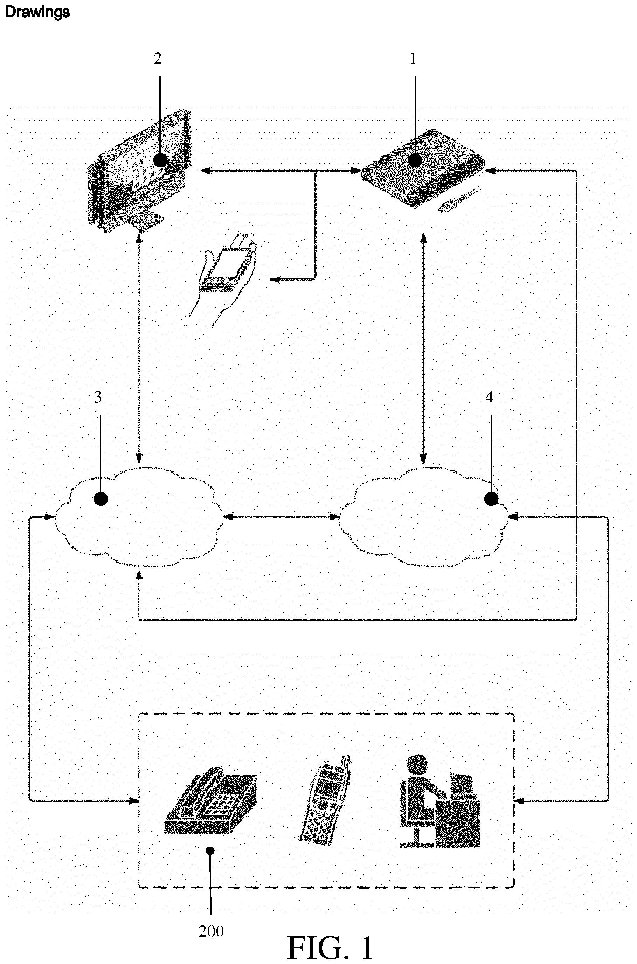

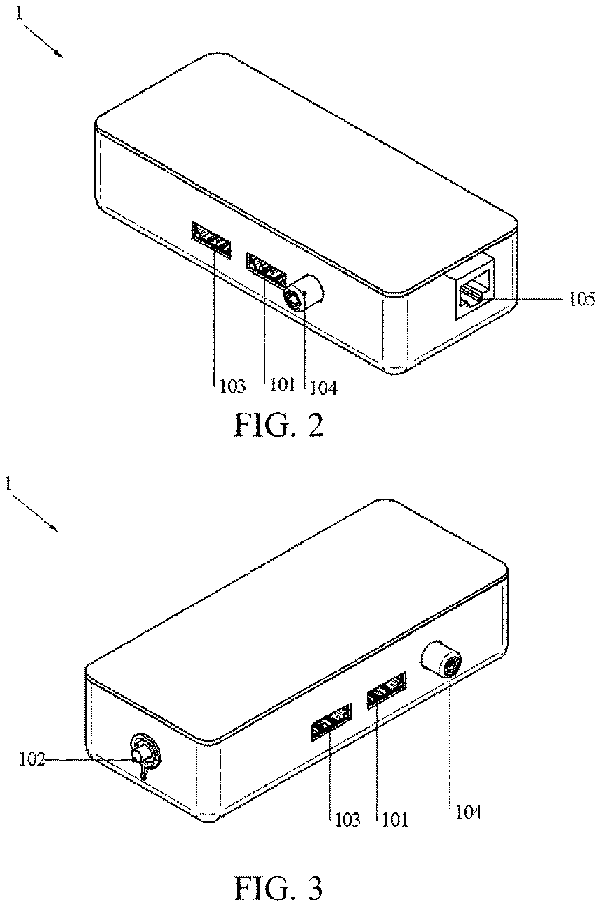

Referring to FIG. 1, 2, 3, it is possible to note that a control device 1 of a media viewing device 2 interacting with a network of media contents 3 and/or a communication network 4 is adapted to allow to send and/or receive a media content, by a notice, a message, an access and/or a telephone call.

Advantageously, the control device 1 comprises means of connection 101 with respect to such media viewing device 2 in order to start an emergency procedure, on basis of sending and/or receiving a default media content, with respect to a pre-ordered list 200 of end-users devices.

In particular, the means of connection 101 belong to electrical connections and/or wireless electromagnetic connections.

The means of connection 101 allow managing the pre-ordered list 200 of end-user devices, by transferring the commands to a remote control unit on such media viewing device 2.

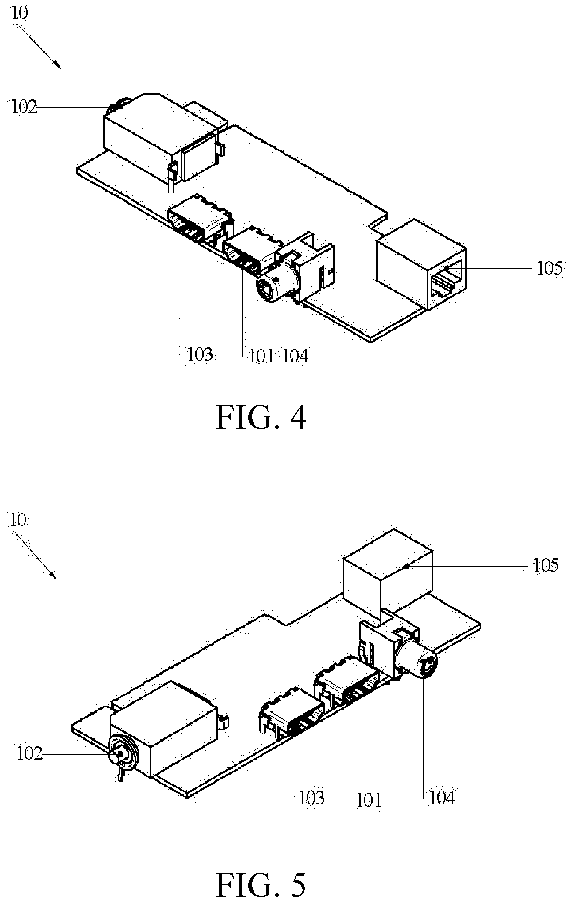

Referring to FIGG. 4, 5, the control device 1 comprises a bidirectional sub-communication device 10 activated automatically and/or manually. Automatically, by means of a signal from the communication network 4. Manually, by means of at least one 102 button, to allow to automatically start an emergency procedure.

Furthermore, the bidirectional sub-communication device 10 comprises at least additional means of connection 103, 104, 105, to allow connection to such media viewing device 2, receiving and sending SMS messages, wi-fi and/or Bluetooth connection, activating microphones and speakers in speakerphone, both internal and external, with respect to such media viewing device 2, activating LEDs for night detection and flashing LEDs during the operational phase.

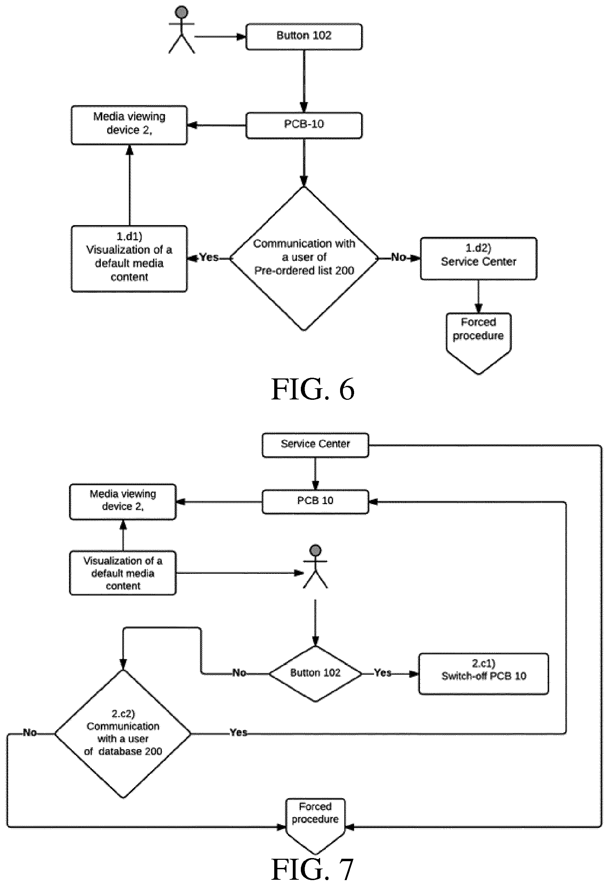

Referring to FIG. 6, an emergency procedure by means of a control device 1, comprises the following steps:
1.a) automatic sending of a default media content to a first device of the pre-ordered list 200, by means of manual activation of the bidirectional sub-communication device 10;
1.b) automatic sending of the default media content, to a subsequent device to the previous device, with respect to the pre-ordered list 200, through automatic activation of the bidirectional sub-communication device 10, as a result of failure to answer the previous device;
1.c1) interruption of the previous phase, as a result of the called device response;
1.c2) execution of the phase 1.b, until the completion of that pre-ordered list 200;
1.d1) displaying a default media content by means of such media viewing device 2, in the event of response of the pre-ordered list device 200, of one of the previous stages;
1.d2) automatic sending of an alert message to the default device of that pre-ordered list 200, or to a service centre, in case of failure to respond to each device of the pre-ordered list 200, in the phase 1.c2;
1.e) automatic shut off of the bidirectional sub-communication device 10.

Referring to FIG. 7, a variation of the emergency procedure, by means of a control device 1, described above, comprises the following steps:
2.a) automatic receiving of a default media content, coming from a device of the pre-ordered list 200, or coming from a default device of the pre-ordered list 200, or coming from a service centre, by means of an automatic activation of the bidirectional sub-communication device 10;
2.b) automatically displaying the default media content, by means of such media viewing device 2;
2.c1) sending a response default media content addressed to the device of the previous phases through manual deactivation of the bidirectional sub-communication device 10;
2.c2) automatic start of a forced shut off procedure of the bidirectional sub-communication device 10, in a case of failure in manual deactivation in the previous phase.

### Examples

When standing by, the media viewing device is switched-on by the call coming from a device of the pre-ordered list of devices.

When the media viewing device is switched on, the visualization of media content appears, as a result of a change of source, from TV to HDMI.

The media viewing device can operate as a phone display and as a speaker, while a remote control apparatus supplied with the media viewing device can operate as a keyboard and a microphone.

The control device of a media viewing device allows selecting a phone number of the device belonging to an end user of the pre-ordered list of devices and, alternatively, to enter and store a new number by means of a remote control thus updating the Pre-ordered list of devices.

The control device of a media viewing device can be programmed via SMS, via a PC or via remote control, in order to define the hierarchical sequence of the calls to mobile or fixed phones addressed by ripple effect until a user response allows to terminate the call cycle.

The calls are sequentially activated via the button, which is located on the control device.

Each device called may receive an SMS message with predefined text, plus a phone company message notifying the reception of the call.

All calls and SMS messages sent and received by the control device can be recorded and stored on a technological specific monitoring platform by means of an SD card and/or monitoring main unit.

In the case of a media viewing display equipped with a camera, the control device can launch video calls.

A commercial type rechargeable phone can be integrated to the two-way subcommunication device of such a control device.

Alternatively, the two-way subcommunication device can be integrated into the media viewing device.

The control device of a media viewing device is provided with different colour LEDs to allow an immediate diagnostic and malfunctions report. Further Leds, of a flashing type, allow reporting through cable or Wi-Fi the SIM charging state, the software state, the Internet connection.

In addition, a Bluetooth function allows a medical monitoring.

The control device of a media viewing device can be constituted by a single-board computer device, namely a computer implemented on a single electronic card, specially designed for bi-directional functional and economical communication, to provide the following functions:
receiving apparatus of SMS messages and sending them to a Smart TV;
receiving and sending Wi-Fi messages to a Smart TV;
receiving and sending acknowledgments of the received messages to the managing platform and to the sender;
apparatus for sending phone calls to family/tutor/call centre, with activation of hands-free microphones and speakers.

Other features included in the device are: activation of LED lights for night detection and flashing when receiving messages; quantitative development of applications in order to realize an electronic customized card, miniaturizing the apparatus and optimizing its production and functions.

### Example 1.

### ASSISTANCE TO CHRONICITY:

1) The staff organises the sending of messages and reminders.
2) The system sends messages to the TV set of each user: Did you take the evening tablet/pill?
3) YES / NO. Automatic Feedback.
4) No user's response, the system will call a family member for a first contact.
5) In the event of failure of a contact with a family member, the call centre is contacted.

### Example 2.

### INTEGRATION OF REMOTE SUPPORT SERVICES:

1) The user, elderly or sick person, requests assistance by pressing the button of the device connected to its own media viewing device.
2) The device sends a first call to a family member.
3) Feedback.
4) Alternatively, the device sends the request to a call centre.

### Example 3.

### MONITORING OF THE CARE PERSONNELL:

1) The user, elderly or sick person, requests assistance by pressing the button of the device connected to its own media viewing device.
2) The system sends the request to the attendant.
3) The attendant receiving the call or the SMS manages the request.
4) If the attendant does not manage the request despite the sending of a predetermined number of calls or SMS:
5.1) The system sends an SMS to the manager.
5.2) The system also sends a fax to the Administrative Department.

### Example 4.

### PROTECTION OF SENIORS AND FAMILY:

1) The user, elderly or sick person, requests assistance by pressing the button of the device connected to its own media viewing device.
2) The device sends the request to a first family member.
3) In the event of failure of the contact with the family member, the device calls a second family member
4) or a third family member.

### Example 5.

### SAFETY FOR FAMILY AND MOTOR VEHICLES:

1.1) In case of vehicle breakdown, the user sends an SMS to a monitoring unit.
1.2) In case of failure, the motor vehicle is able to send an Alert message to a monitoring unit.
2) The control unit receives and processes the request by distributing a communication.
3.1) The control unit sends the Alert via TV.
3.2) The control unit sends the Alert to the family members and to a call centre.

### Example 6.

### CIVIL PROTECTION AND DISCLOSURE FROM PUBLIC AUTHORITY:

1) In case of emergency, The Civil Defense can send massive communication: WARNING! Emergency: strong thunderstorms! We recommend staying indoors.
2) The control unit receives and sends such communications to recipients of users geolocated by area.
3) By turning off the audible alarms and closing the Pop-Ups, users confirm the sender the message has been delivered,

### Example 7.

### PROJECT DELIVERY:

The Italian Post Service sends to public authorities and to companies its institutional communications using its own TV database. For example: POST STAFF WILL RING YOU TODAY FOR DELIVERY OF PACKAGES AND REGISTERED LETTERS. Warning! Alert MAIL COMING!

The Social Security Fund communicates the retire the credit entry of the pension monthly.

The Civil Defence warns people in case of weather events and informs about major events.

The municipalities inform their citizens.

The apartment-block Administrators alerts the residents and the co-owners.

## Claims

1. Emergency procedure operated by a control device (1) of a TV (2), to interact with a network of media contents (3) and/or a communication network (4), said control device (1) being adapted to send and/or receive a media content, by a notice, a message, an access and/or a telephone call, **characterized in that** the control device (1) comprises an HDMI connection (101), with respect to said TV (2), in order to start the emergency procedure, on basis of sending and/or receiving a default media content, with respect to a pre-ordered list (200) of end-users devices, wherein said emergency procedure comprises: when standing by, the TV (2) is switched-on by a call coming from a device of the pre-ordered list (200) of devices and when the TV (2) is switched on, a visualization of media content appears, as a result of a change of source, from TV to HDMI.

2. Emergency procedure operated by a control device (1), according to the previous claim, **characterized in that** said HDMI connection (101) allows managing said pre-ordered Ist (200) of end-user devices, by transferring the commands to a remote-control unit on said TV (2).

3. Emergency procedure operated by a control device (1), according to the previous claim, **characterized in that** the control device comprises a bidirectional sub-communication device (10), said bidirectional sub-communication device (10) can be activated automatically, by means of a signal from said communication network (4) and/or by a manual signal, by means of at least one (102) button, to allow to automatically start an emergency procedure.

4. Emergency procedure operated by a control device (1), according to the previous claim, **characterized in that** said bidirectional sub-communication device (10) comprises at least further means of connection (103, 104, 105), to allow connection to said TV (2), receiving and sending SMS messages, wi-fi and/or Bluetooth connection, activating microphones and speakers in speakerphone, both internal and external, with respect to such TV (2), activating LEDs for night detection and flashing LEDs

5. Emergency procedure according to claim 3 or 4, **characterized in that** it comprises the following steps:
1.a) automatic sending of a defaut media content to a first device of said pre-ordered list (200), by means of manual activation of said bidirectional sub-communication device (10);
1.b) automatic sending of the default media content, to a subsequent device to the previous device, with respect to said pre-ordered list (200), through automatic activation of said bidirectional sub-communication device (10), as a result of failure to answer the previous device;
1.c1) interruption of the previous phase, as a result of the called device response;
1.c2) execution of the phase 1.b) until the completion of that pre-ordered list (200);
1.d1) displaying a default media content by means of said TV (2), in the event of response of said pre-ordered list device (200), of one of previous stages;
1.d2) automatic sending of an alert message to the default device of that pre-ordered list (200), or to a service center, in case of failure to respond to each device of said pre-ordered list (200), in the phase 1.c2);
1.e) automatic shut off of said bidirectional sub-communication device (10);
and wherein the emergency procedure comprises: when standing by, the TV (2) is switched-on by a call coming from a device of the pre-ordered list (200) of devices, and when the TV (2) is switched on, a visualization of media content appears, as a result of a change of source, from TV to HDMI.

6. Emergency procedure according to claim 3 or 4, **characterized in that** it comprises the following steps:
2.a) automatic receiving a default media content, coming from a device of said pre-ordered list (200), or coming from a default device of said pre-ordered list (200), or coming from a service center, by means of an automatic activation of said bidirectional sub-communication device (10);
2.b) automatically displaying the default media content, by means of said TV (2);
2.c1) sending a response default media content addressed to the device of the previous phases through manual deactivation of said bidirectional sub-communication device (10);
2.c2) automatic start of a forced termination procedure of said bidirectional sub-communication device (10), in a case of failure in manual deactivation in the previous phase;
and wherein the emergency procedure comprises: when standing by, the TV (2) is switched-on by a call coming from the device of the pre-ordered list (200) of devices and when the TV (2) is switched on, a visualization of the media content appears, as a result of a change of source, from TV to HDMI.

## Patentansprüche

1. Notfallvorgang, betrieben durch eine Steuervorrichtung (1) eines Fernsehgeräts (2), um mit einem Netzwerk von Medieninhalten (3) und/oder einem Kommunikationsnetzwerk (4) zu interagieren, wobei die Steuervorrichtung (1) ausgelegt ist, um einen Medieninhalt durch eine Benachrichtigung, eine Nachricht, einen Zugriff und/oder einen Telefonanruf zu senden und/oder zu empfangen,
**dadurch gekennzeichnet, dass** die Steuervorrichtung (1) eine HDMI--Verbindung (101) in Bezug auf das Fernsehgerät (2) umfasst, um den Notfallvorgang zu starten, auf Grundlage des Sendens und/oder Empfangens eines Standardmedieninhalts in Bezug auf eine vorbestellte Liste (200) von Endbenutzervorrichtungen, wobei der Notfallvorgang Folgendes umfasst: wenn es im Standby-Modus ist, wird das Fernsehgerät (2) durch einen Anruf eingeschaltet, der von einer Vorrichtung der vorbestellten Liste (200) von Vorrichtungen kommt, und wenn das Fernsehgerät (2) eingeschaltet ist, erscheint eine Visualisierung von Medieninhalt als Folge einer Änderung der Quelle von Fernsehgerät zu HDMI.

2. Notfallvorgang, betrieben durch eine Steuervorrichtung (1), nach dem vorhergehenden Anspruch, **dadurch gekennzeichnet, dass** die HDMI-Verbindung (101) Verwaltung der vorbestellten Liste (200) von Endbenutzergeräten ermöglicht, indem die Befehle an eine Fernbedienungseinheit an dem Fernsehgerät (2) übertragen werden.

3. Notfallvorgang, betrieben durch eine Steuervorrichtung (1), nach dem vorhergehenden Anspruch, **dadurch gekennzeichnet, dass** die Steuervorrichtung eine bidirektionale Unterkommunikationsvorrichtung (10) umfasst, wobei die bidirektionale Unterkommunikationsvorrichtung (10) mittels einem Signal von dem Kommunikationsnetzwerk (4) und/oder durch ein manuelles Signal, mittels zumindest einem (102) Knopf automatisch aktiviert werden kann, um zu ermöglichen, dass ein Notfallvorgang automatisch startet.

4. Notfallvorgang, betrieben durch eine Steuervorrichtung (1), nach dem vorhergehenden Anspruch, **dadurch gekennzeichnet, dass** die bidirektionale Unterkommunikationsvorrichtung (10) zumindest weitere Verbindungsmittel (103, 104, 105) umfasst, um Verbindung mit dem Fernsehgerät (2), Empfangen und Senden von SMS-Nachrichten, WiFi- und/oder Bluetooth-Verbindung, Aktivieren von Mikrofonen und Lautsprechern in Freisprecheinrichtung, sowohl intern als auch extern, in Bezug auf ein solches Fernsehgerät (2), Aktivieren von LEDs für Nachterkennung und Blinken von LEDs während der Betriebsphase zu ermöglichen.

5. Notfallvorgang nach Anspruch 3 oder 4, **dadurch gekennzeichnet, dass** er die folgenden Schritte umfasst:
1.a) automatisches Senden eines Standardmedieninhalts an eine erste Vorrichtung der vorbestellten Liste (200), mittels einer manuellen Aktivierung der bidirektionalen Unterkommunikationsvorrichtung (10);
1.b) automatisches Senden des Standardmedieninhalts an eine nachfolgende Vorrichtung zu der vorhergehenden Vorrichtung, in Bezug auf die vorbestellte Liste (200), durch automatische Aktivierung der bidirektionalen Unterkommunikationsvorrichtung (10), als Folge von Versagen, der vorhergehenden Vorrichtung zu antworten;
1.c1) Unterbrechung der vorhergehenden Phase, als Folge der Antwort der angerufenen Vorrichtung;
1.c2) Ausführung der Phase 1.b) bis zur Komplettierung dieser vorbestellten Liste (200);
1.d1) Anzeigen eines Standardmedieninhalts mittels des Fernsehgeräts (2), in dem Fall von Antwort der Vorrichtung der vorbestellten Liste (200), von einer von vorhergehenden Stufen;
1.d2) automatisches Senden einer Warnnachricht an die Standardvorrichtung dieser vorbestellten Liste (200), oder an ein Service-Center, im Fall von Versagen, jeder vorhergehenden Vorrichtung der vorbestellten Liste (200) zu antworten, in der Phase 1.c2);
1.e) automatisches Abschalten der bidirektionalen Unterkommunikationsvorrichtung (10);
und wobei der Notfallvorgang Folgendes umfasst: wenn es im Standby-Modus ist, wird das Fernsehgerät (2) durch einen Anruf eingeschaltet, der von einer Vorrichtung der vorbestellten Liste (200) von Vorrichtungen kommt, und wenn das Fernsehgerät (2) eingeschaltet ist, erscheint eine Visualisierung von Medieninhalt, als Folge einer Änderung der Quelle von Fernsehgerät zu HDMI.

6. Notfallvorgang nach Anspruch 3 oder 4, **dadurch gekennzeichnet, dass** er die folgenden Schritte umfasst:
2.a) automatisches Empfangen eines Standardmedieninhalts, der von einer Vorrichtung der vorbestellten Liste (200) kommt, oder der von einer Standardvorrichtung der vorbestellten Liste (200) kommt, oder der von einem Service-Center kommt, mittels einer automatischen Aktivierung der bidirektionalen Unterkommunikationsvorrichtung (10);
2.b) automatisches Anzeigen des Standardmedieninhalts, mittels des Fernsehgeräts (2);
2.c1) Senden eines Antwortstandardmedieninhalts adressiert an die Vorrichtung der vorhergehenden Phasen durch manuelle Deaktivierung der bidirektionalen Unterkommunikationsvorrichtung (10);
2.c2) automatisches Starten eines erzwungenen Beendigungsvorgangs der bidirektionalen Unterkommunikationsvorrichtung (10), in einem Fall von Versagen der manuellen Deaktivierung in der vorhergehenden Phase;
und wobei der Notfallvorgang Folgendes umfasst: wenn es im Standby-Modus ist, wird das Fernsehgerät (2) durch einen Anruf eingeschaltet, der von der Vorrichtung der vorbestellten Liste (200) von Vorrichtungen kommt, und wenn das Fernsehgerät (2) eingeschaltet ist, erscheint eine Visualisierung des Medieninhalts, als Folge einer Änderung der Quelle von Fernsehgerät zu HDMI.

## Revendications

1. Procédure d'urgence activée par un dispositif de commande (1) d'un TV (2), pour interagir avec un réseau de contenus multimédias (3) et/ou un réseau de communication (4), ledit dispositif de commande (1) étant adapté pour envoyer et/ou recevoir un contenu multimédia, par une notification, un message, un accès et/ou un appel téléphonique,
**caractérisé en ce que** le dispositif de commande (1) comprend une connexion HDMI (101), par rapport audit TV (2), afin de démarrer la procédure d'urgence, sur la base de l'envoi et/ou de la réception d'un contenu multimédia par défaut, par rapport à une liste préalablement ordonnée (200) de dispositifs d'utilisateur final, ladite procédure d'urgence comprenant : lorsqu'il est en veille, le TV (2) est allumé par un appel provenant d'un dispositif de la liste préalablement ordonnée (200) de dispositifs et lorsque le TV (2) est allumé, une visualisation du contenu multimédia apparaît, suite à un changement de source, de TV à HDMI.

2. Procédure d'urgence activée par un dispositif de commande (1), selon la revendication précédente, **caractérisée**
**en ce que** ladite connexion HDMI (101) permet de gérer ladite liste préalablement ordonnée (200) de
dispositifs d'utilisateur final, en transférant les commandes à une unité de télécommande sur ledit TV (2).

3. Procédure d'urgence activée par un dispositif de commande (1), selon la revendication précédente, **caractérisée**
**en ce que** le dispositif de commande
comprend un dispositif de sous-communication bidirectionnel (10), ledit dispositif de sous-communication bidirectionnel (10) pouvant être activé automatiquement, au moyen d'un signal provenant dudit réseau de communication (4) et/ou par un signal manuel, au moyen d'au moins un bouton (102), pour permettre de démarrer automatiquement une procédure d'urgence.

4. Procédure d'urgence activée par un dispositif de commande (1) selon la revendication précédente, **caractérisée en ce que** ledit dispositif de sous-communication bidirectionnel (10) comprend au moins un moyen de connexion supplémentaire (103, 104, 105), pour permettre une connexion audit TV (2), la réception et l'envoi de messages SMS, une connexion Wi-Fi et/ou Bluetooth, une activation des microphones et des haut-parleurs dans le téléphone à haut-parleur, à la fois internes et externes, par rapport à ce TV (2), l'activation de LED pour la détection nocturne et le clignotement de LED durant la phase fonctionnelle.

5. Procédure d'urgence selon la revendication 3 ou 4, **caractérisée en ce qu'**elle comprend les étapes suivantes :
1. a) envoi automatique d'un contenu multimédia par défaut à un premier dispositif de ladite liste préalablement ordonnée (200), au moyen d'une activation manuelle dudit dispositif de sous-communication bidirectionnel (10) ;
1.b) envoi automatique du contenu multimédia par défaut, à un dispositif suivant au dispositif précédent, par rapport à ladite liste préalablement ordonnée (200), par
l'activation automatique dudit dispositif de sous-communication bidirectionnel (10), à la suite d'un échec de réponse au dispositif précédent ;
1.c1) interruption de la phase précédente, suite à la réponse du dispositif appelé ;
1.c2) exécution de la phase 1.b) jusqu'à l'achèvement de cette liste préalablement ordonnée (200) ;
1.d1) affichage d'un contenu multimédia par défaut au moyen dudit TV (2), en cas de réponse dudit dispositif de liste préalablement ordonnée (200), de l'une des étapes précédentes ;
1.d2) envoi automatique d'un message d'alerte au dispositif par défaut de cette liste préalablement ordonnée (200), ou à un centre de service, en cas d'un échec de réponse à chaque dispositif de ladite liste préalablement ordonnée (200), dans la phase 1.c2) ;
1.e) arrêt automatique dudit dispositif de sous-communication bidirectionnel (10) ;
et ladite procédure d'urgence comprenant : lorsqu'il est en veille, le TV (2) est allumé par un appel provenant d'un dispositif de la liste préalablement ordonnée (200) de dispositifs, et lorsque le TV (2) est allumé, une visualisation du contenu multimédia apparaît, suite à un changement de source, de TV à HDMI.

6. Procédure d'urgence selon la revendication 3 ou 4, **caractérisée en ce qu'**elle comprend les étapes suivantes :
2. a) réception automatique d'un contenu multimédia par défaut, provenant d'un dispositif de ladite liste préalablement ordonnée (200), ou provenant d'un dispositif par défaut de ladite liste préalablement ordonnée (200), ou provenant d'un centre de service, au moyen d'une activation automatique dudit dispositif de sous-communication bidirectionnel (10) ;
2. b) affichage automatique du contenu multimédia par défaut, au moyen dudit TV (2) ;
2.c1) envoi d'un contenu multimédia de réponse par défaut adressé au dispositif des phases précédentes par désactivation manuelle dudit dispositif de sous-communication bidirectionnel (10) ;
2.c2) démarrage automatique d'une procédure de terminaison forcée dudit dispositif de sous-communication bidirectionnel (10), en cas d'échec de désactivation manuelle dans la phase précédente ;
et ladite procédure d'urgence comprenant : lorsqu'il est en veille, le TV (2) est allumé par un appel provenant du dispositif de la liste préalablement ordonnée (200) de dispositifs et lorsque le TV (2) est allumé, une visualisation du contenu multimédia apparaît, suite à un changement de source, de TV à HDMI.
